(19) Europäisches Patentamt

**European Patent Office**

**Office européen des brevets**

(11) Veröffentlichungsnummer: **0 432 603 B1**

(12) **EUROPÄISCHE PATENTSCHRIFT**

(45) Veröffentlichungstag der Patentschrift: **03.08.94**

(21) Anmeldenummer: **90123065.6**

(22) Anmeldetag: **01.12.90**

(51) Int. Cl.⁵: **H02M  3/335**

(54) **Gleichspannungswandler, insbesondere vom Typ eines Ouasi-Resonanzwandlers.**

(30) Priorität: **15.12.89 DE 3941420**

(43) Veröffentlichungstag der Anmeldung:
**19.06.91 Patentblatt  91/25**

(45) Bekanntmachung des Hinweises auf die
Patenterteilung:
**03.08.94 Patentblatt  94/31**

(84) Benannte Vertragsstaaten:
**FR GB IT NL**

(56) Entgegenhaltungen:
**EP-A- 0 330 987**
**US-A- 1 920 948**
**US-A- 3 652 958**

(73) Patentinhaber: **ANT Nachrichtentechnik GmbH**
**Gerberstrasse 33**
**D-71522 Backnang(DE)**

(72) Erfinder: **Grünsch, Eckhardt**
**Ernst-Wecker-Strasse 10**
**W-7173 Mainhardt(DE)**

Rank Xerox (UK) Business Services
(3. 10/3.0 9/3.3.3)

## Beschreibung

Die Erfindung betrifft einen Gleichspannungswandler gemäß dem Oberbegriff des Patentanspruchs 1.
Solche Gleichspannungswandler sind bekannt (EP 0 330 987; IEEE Power Electronics Specialists Conference, Université Paul Sabatier, Toulouse, France, 1985, Seiten 106 bis 116).

Gleichspannungswandler vom Zerhackerprinzip werden zur Erhöhung der Arbeitsfrequenz mit induktiven und kapazitiven Elementen beschaltet, um das Stellglied im Nulldurchgang verlustfrei schalten zu können. Durch die zusätzliche Beschaltung werden quasi-sinusförmige Ströme eingeprägt.

Der Erfindung liegt die Aufgabe zugrunde ei-nen derartigen Gleichspannungswandler so auszu-bilden, daß er ein gutes dynamisches Verhalten aufweist, d.h. sich auf schnelle Laständerungen einstellen kann. Diese Aufgabe wird durch die Merkmale des Patentanspruchs 1 gelöst. In den Unteransprüchen sind vorteilhafte Aus-/Weiterbildungen aufgezeigt.

Der Gleichspannungswandler nach der Erfindung zeichnet sich dadurch aus, daß während der Energieübertragungsphase des Gleichspannungswandlers - Stellglied eingeschaltet - ein Teil des Resonanzstromes unverzögert, d.h. ohne Phasendrehung direkt in den ausgangsseitigen Glättungskondensator, beziehungsweise zur Last fließen kann. Dies bedeutet, daß der Einfluß der Phasendrehung der Glättungsdrossel erheblich verringert ist. Dies erhöht die Phasenreserve des Regelkreises und verbessert das dynamische Verhalten des Reglers, insbesondere bei Lastsprüngen.
Während der Energieübertragung des Gleichspannungswandlers - Stellglied geschlossen - arbeitet die Glättungsdrossel auch als Stromwandler. Die Induktivität des zusätzlichen induktiven Elements bzw. ein Teil der Glättungsdrossel bestimmt in Verbindung mit dem kapazitiven Element im we-sentlichen die Resonanzfrequenz der Stromhalb-welle. Die Streuinduktivität des zusätzlichen Stromwandlers ist dabei vernachlässigbar. Nach Öffnen des Stellgliedes arbeitet nur noch die Glättungsdrossel.

Anhand der Zeichnungen wird die Erfindung nun näher erläutert.

Es zeigen
Figur 1
ein Prinzipschaltbild des Gleichspannungswandlers nach der Erfindung,
Figur 2 bis Figur 11
ausgewählte Oszillogramme von Strom- und Spannungsverläufen beim Gleichspannungswandler nach der Erfindung,
Figur 12
ein Prinzipschaltbild des Gleichspannungswandlers nach der Erfindung mit günstiger Laststromauswertung.

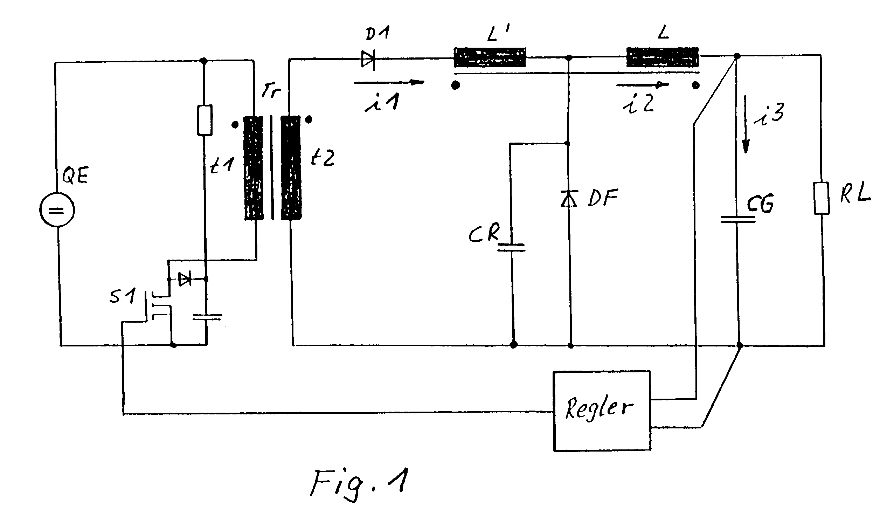

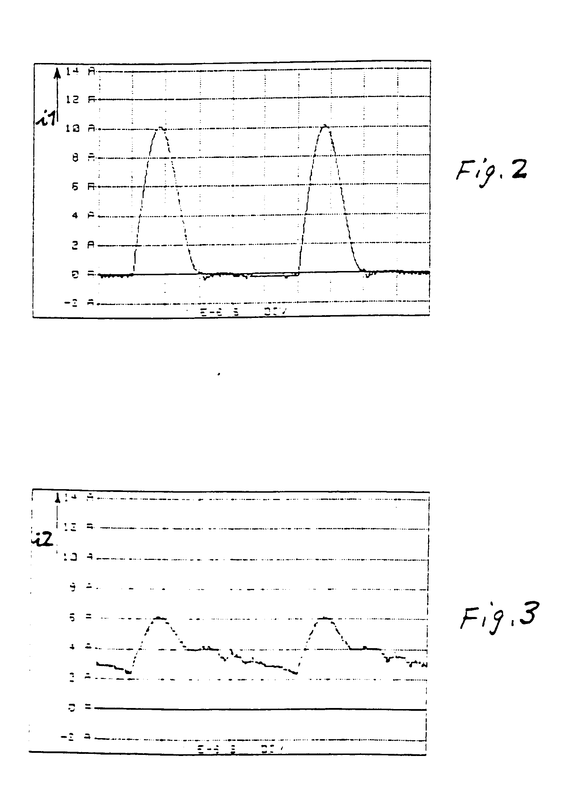

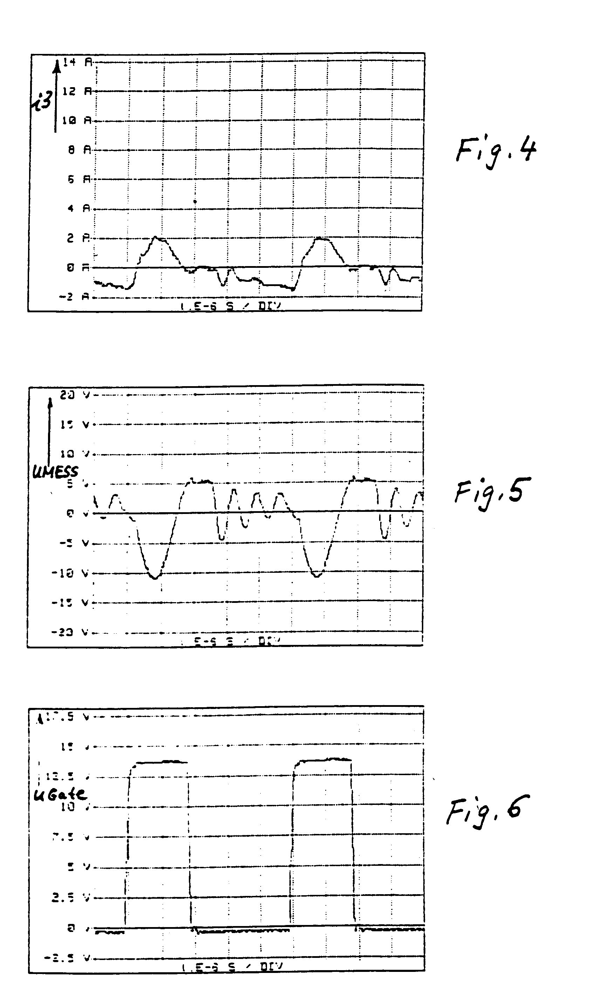

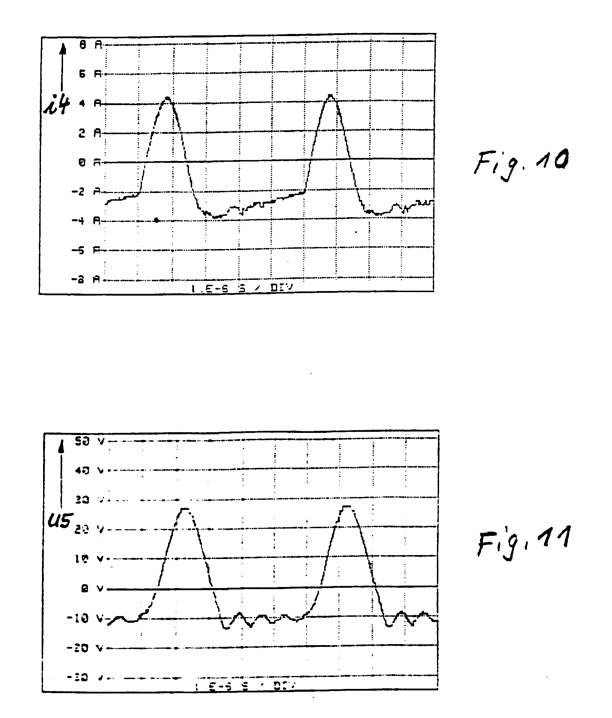

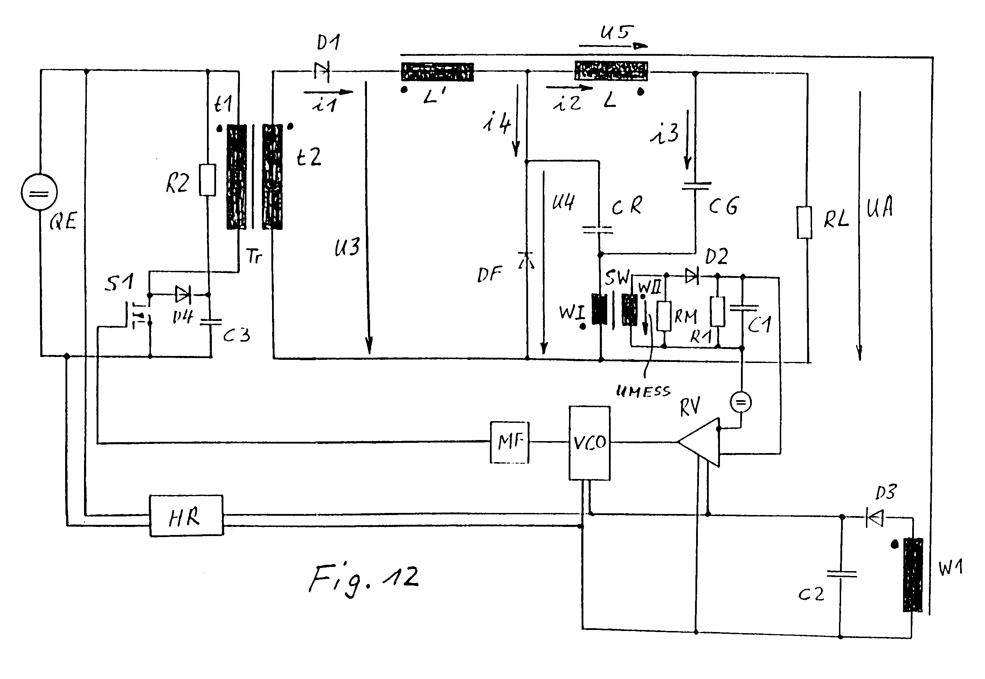

Der in Figur 1 dargestellte Quasi-Resonanzwandler arbeitet nach dem Flußwandlerprinzip mit galvanischer Trennung zwischen Gleichspannungsversorgungskreis und Gleichspannungs-Lastkreis. Die Gleichspannungsquelle QE ist über das Schaltregler-Stellglied S1 mit der Primärwicklung t1 des Transformators Tr verbunden. Die Sekundärwicklung t2 des Transformators Tr ist über die Serienschaltung aus Gleichrichter D1 und Glättunsdrossel L mit dem ausgangsseitigen Glättungskondensator CG, der parallel zur Last RL liegt, verbunden. Die beim Flußwandler übliche Freilaufdiode ist mit DF bezeichnet.
Parallel zur Freilaufdiode DF ist das resonanzbestimmende kapazitive Element - Kondensator CR - des Quasi-Resonanzwandlers angeordnet. Das induktive resonanzbestimmende Element des Quasi-Resonanzwandlers ist entweder Teil der Glättungsdrossel L oder ein mit der Glättungsdrossel L ma-gnetisch gekoppeltes zusätzliches induktives Ele-ment L'. Wie in Figur 1 dargestellt, liegt das induktive Element L' zwischen dem Gleichrichter D1 und dem Verbindungspunkt der Kathode der Freilaufdiode DF mit der Glättungsdrossel L. Der Wicklungssinn der Wicklung auf dem Element L' ist bezüglich des Wicklungssinns der Wicklung auf der Glättungsdrossel L - in Figur 1 durch einen Punkt markiert - derart, daß während der Energieübertragung des Gleichspannungswandlers - das Schaltregler-Stellglied S1 ist dann geschlossen - ein Teil des Resonanzstromes zum Ausgang des Gleichspannungswandlers, beziehungsweise in dessen ausgangsseitigen Glättungskondensator CG fließen kann. Die Glättungsdrossel L arbeitet zusammen mit dem induktiven Element L' als Stromwandler. Die Induktivität des induktiven Elements L' bestimmt in Verbindung mit dem Kondensator CR im wesentlichen die Resonanzfrequenz der Stromhalbwelle. Das Verhältnis der Windungszahl der Wicklung auf der Glättungsdrossel L zur Windungszahl der Wicklung auf dem zusätzlichen induktiven Element L' wird größer als 1, z.B. 4 gewählt. Dieses Verhältnis wird entsprechend der Anwendung bezüglich des Wirkungsgrades und den dynamischen Eigenschaften optimiert. Der Verlauf der Stromhalbwelle, Strom i1 über den Gleichrichter D1 und das Element L', ist in Figur 2 dargestellt. Ein Zeitachsenteilstrich entspricht in den Figuren 2 bis 11 einer Mikrosekunde (1E-6S/DIV). Der Verlauf des Laststroms i2, der über die Glättungsdrossel L fließt, ist in Figur 3 dargestellt. Für eine realisierte Schaltung betrug der Mittelwert die-ses Laststroms i2 = 4A. Der über den Glättungskondensator CG fließende Strom i3 ist in Figur 4 dargestellt. Es ist ein reiner Wechselstrom.

In einer Ausgestaltung der Erfindung (Fig. 12) ist der Kondensator CR und der Glättungskondensator CG gemeinsam über die Primärwicklung WI eines zusätzlichen Stromwandlers SW geführt. Ist dieser Stromwandler SI als Ringkernübertrager ausgebildet, so kann die Primärwicklung WI einfach dadurch realisiert werden, daß die gemeinsame Zuleitung der Kondensatoren CR und CG zu der nicht unmittelbar mit der Glättungsdrossel L verbundenen Lastklemme durch das Restloch des Ringkerns gesteckt wird. Der Strom i3 erzeugt an der Sekundärwicklung WII des Stromwandlers SW einen Spannungsabfall UMESS (Figur 5), der mit dem Strommeßwiderstand RM erfasst wird. Die Wechselspannung am Strommeßwiderstand RM wird so gleichgerichtet, daß das dem Laststrom proportionale Spannungsplateau spitzenwertintegriert wird (Gleichrichter D2, Widerstand R1, Kondensator C1 in Figur 12).

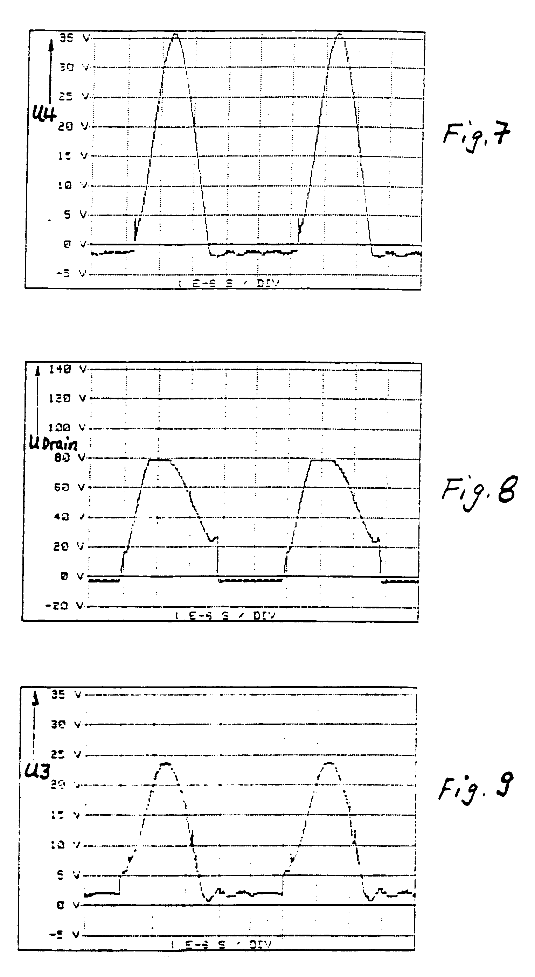

Wenn das Schaltregler-Stellglied S1, das hier als Feldeffekttansistor ausgebildet ist, geöffnet wird (U Gate = OV, vgl. Figur 6), entlädt sich zuerst der Kondensator CR über die Glättungsdrossel L. Nach der Entladung des Kondensators CR fließt der Laststrom weiter über die Freilaufdiode DF (vgl. Figur 3). Die Spannung U4 an der Freilaufdiode DF ist in Figur 7 dargestellt.

Die übrigen Oszillogramme zeigen die Drainspannung UDrain am Feldeffekttransistor S1 (Figur 8), die Spannung U3 am Ausgang des Gleichrichters D1 (Figur 9), den Strom i4 vom Verbindungspunkt der Induktivitäten L, L' zum Resonanzkondensator CR (Figur 10) und die Spannung U5 über der Glättungsdrossel L (Figur 11).

Die Erfindung ist natürlich auch für einen Gleichspannungswandler ohne galvanische Trennung, bei dem der Transformator Tr entfällt, anwendbar.

Der Regler zur Steuerung des Schaltregler-Stellgliedes S1 besteht aus einem VCO (voltage controlled oscillator), dem die spitzenwertintegrierte laststromproportionale Spannung am Kondensator C1, gegebenenfalls verstärkt über einen Regelverstärker RV, als Steuerspannung zugeführt werden kann. Dem VCO ist ein Monoflop MF nachgeschaltet, das von dem Ausgangssignal des VCO getriggert wird. Mit dieser Anordnung wird das Schaltregler-Stellglied S1 mit Einschaltimpulsen konstanter Dauer versorgt. Die Ausschaltdauer des Schaltregler-Stellgliedes S1 ist variabel und von der Ausgangsspannung UA abhängig. Eine hohe Ausgangsspannung UA führt zu einer langen Ausschaltdauer des Schaltregler-Stellgliedes S1 und eine niedrige Ausgangsspannung UA zu einer kurzen Ausschaltdauer.

Die Energieversorgung des Reglers kann für die Zeit während der ein ausreichend hoher Strom i2 durch die Glättungsdrossel L fließt über eine zusätzliche Wicklung W1 auf dem Kern der Glättungsdrossel L erfolgen. Hierzu ist die Wicklung W1 mit einem Gleichrichter D3 und einem Speicherkondensator C2 beschaltet. Beim Anlaufen oder bei Kurzschluß am Ausgang wird die Energieversorgung des Reglers aus der Gleichspannungsquelle QE über einen Hilfsregler HR aufrecht erhalten.

Zur Abmagnetisierung des Transformators Tr ist die Drain-Source Strecke des Feldeffekttransistors S1 mit der Serienschaltung bestehend aus dem Gleichrichter D4 und dem Kondensator C3 beschaltet. Der Verbindungspunkt von Gleichrichter D4 und Kondensator C3 ist über den Widerstand R2 mit der Pluspotential führenden Klemme der Gleichspannungsquelle QE verbunden. Durch diese Beschaltung ist es möglich die Abmagnetisierungsenergie des Transformators Tr auf die Gleichspannungsquelle QE zurückzuspeisen.

**Patentansprüche**

1. Gleichspannungswandler vom Typ eines Quasi-Resonanzwandlers, mit einem induktiven und einem kapazitiven resonanzbestimmenden Element mit einer Glättungsdrossel, einer Freilaufdiode und einem Glättungskondensator, dadurch gekennzeichnet, daß das induktive resonanzbestimmende Element (L') Teil der Glättungsdrossel (L) im Lastkreis des Gleichspannungswandlers oder ein mit der Glättungsdrossel (L) magnetisch gekoppeltes zusätzliches induktives Element ist, wobei der Wicklungssinn der Wicklung auf dem induktiven resonanzbestimmenden Element (L') bezüglich des Wicklungssinnes der Wicklung auf der Glättungsdrossel (L) derart gewählt ist, daß während der Energieübertragung des Gleichspannungswandlers ein Teil des Resonanzstromes zum Ausgang des Gleichspannungswandlers, beziehungsweise in dessen ausgangsseitigen Glättungskondensator (CG), fließen kann, daß das kapazitive resonanzbestimmende Element (CR) und die Freilaufdiode (DF) des Gleichspannungswandlers vom ausgangsseitigen Glättungskondensator (CG) über die Glättungsdrossel (L) und von der Eingangsseite durch das induktive resonanzbestimmende Element (L') entkoppelt sind.

2. Gleichspannungswandler nach Anspruch 1, dadurch gekennzeichnet, daß das Verhältnis der Windungszahl der Wicklung auf der Glättungsdrossel (L) zur Windungszahl der Wicklung auf dem zusätzlichen induktiven resonanzbestimmenden Element (L') größer als eins, z.B. vier, gewählt ist.

3. Gleichspannungswandler nach Anspruch 1 oder 2, dadurch gekennzeichnet, daß der Gleichspannungswandler einen Regelkreis aufweist zur Steuerung des Gleichspannungswandler-Stellgliedes (S1) in Abhängigkeit der Ausgangsspannung (UA) des Gleichspannungswandlers in dem Sinne, daß das Stellglied (S1) mit konstanter Einschaltzeit und variabler Ausschaltzeit betreibbar ist, wobei bei hoher Ausgangsspannung (UA) eine lange Ausschaltzeit und bei niedriger Ausgangsspannung (UA) eine kurze Ausschaltzeit vorgebbar ist.

4. Gleichspannungswandler nach einem der Ansprüche 1 bis 3, dadurch gekennzeichnet, daß die Glättungsdrossel (L) eine zusätzliche Wicklung (W1) aufweist über welche die Energieversorgung des Reglers zumindest teilweise erfolgen kann.

5. Gleichspannungswandler nach einem der Ansprüche 1 bis 4, dadurch gekennzeichnet, daß das resonanzbestimmende kapazitive Element (CR) und der ausgangsseitige Glättungskondensator (CG) des Gleichspannungswandlers an ihrem Fußpunkt miteinander verbunden und gemeinsam über die Primärwicklung (WI) eines zusätzlichen Stromwandlers (SW) geführt sind, welcher zur Gewinnung eines laststromproportionalen Signals vorgesehen ist.

**Claims**

1. Direct voltage converter of the type of a quasi-resonant converter, with an inductive and a capacitive element determining resonance, a smoothing choke, a freewheel diode and a smoothing capacitor, characterised thereby that the inductive element (L'), determining resonance is part of the smoothing choke (L) in the load circuit of the direct voltage converter or is an additional inductive element magnetically coupled with the smoothing choke (L), wherein the winding sense of the winding on the inductive element (L') determining resonance is so selected with respect to the winding sense of the winding on the smoothing choke (L) that during the energy transmission of the direct voltage converter a part of the resonant current can flow to the output of the direct voltage converter or into the smoothing capacitor (CG) thereof at the output side, that the capacitive element (CR) determining resonance and the freewheel diode (DF) of the direct voltage converter are decoupled from the smoothing capacitor (CG) at the output side by way of the smoothing choke (L) and from the input side by way of the inductive element (L') determining resonance.

2. Direct voltage converter according to claim 1, characterised thereby that the ratio of the winding number of the winding on the smoothing choke (L) to the winding number of the winding on the additional induction element (L') determining resonance is selected to be greater than one, for example four.

3. Direct voltage converter according to claim 1 or 2, characterised thereby that the direct voltage converter comprises a regulating circuit for the control of the direct voltage converter setting member (S1) in dependence on the output voltage (UA) of the direct voltage converter in the sense that the setting member (S1) is operable with constant on-time and variable off-time, wherein in the case of high output voltage (UA) a long switching-off time is presettable and in the case of low output voltage (UA) a short switching-off time is presettable.

4. Direct voltage converter according to one of claims 1 to 3, characterised thereby that the smoothing choke (L) has an additional winding (W1) by way of which the energy supply of the regulator can take place at least partly.

5. Direct voltage converter according to one of claims 1 to 4, characterised thereby that the capactive element (CR) determining resonance and the smoothing capacitor (CG), at the output side, of the direct voltage converter are connected together at their foot point and are led in common by way of the primary winding (WI) of an additional current transformer (SW), which is provided for the obtaining of a signal proportional to load current.

**Revendications**

1. Convertisseur continu-continu du type d'un convertisseur quasi-résonant, comprenant un élément inductif et un élément capacitif déterminants pour la résonance, une inductance de lissage, une diode de roue libre et un condensateur de lissage, caractérisé en ce que l'élément inductif (L') déterminant pour la résonance est une partie de l'inductance de lissage (L) dans le cirduit de charge du convertisseur continu-continu ou est constitué par un élément inductif supplémentaire couplé magnétiquement à l'inductance de lissage (L), le sens de bobinage de l'enroulement sur l'élément inductif (L') déterminant pour la résonance, étant choisi, par rapport au sens de bobinage de l'enroulement sur l'inductance de lissage (L), de manière que pendant la transmission d'énergie du convertisseur continu-continu, une partie du courant de résonance puisse passer vers la sortie du convertisseur continu-continu, ou dans son condensateur de lissage côté sortie (CG), et que l'élément capacitif (CR) déterminant pour la résonance et la diode de roue libre (DF) du convertisseur continucontinu sont découplés du condensateur de lissage côté sortie (CG) par l'inductance de lissage (L) et, du côté de l'entrée, par l'élément inductif (L') déterminant pour la résonance.

2. Convertisseur continu-continu selon la revendication 1, caractérisé en ce que le rapport du nombre de spires de l'enroulement sur l'inductance de lissage (L) au nombre de spires de l'enroulement sur l'élément inductif supplémentaire (L') déterminant pour la resonance, est choisi supérieur à un, ce rapport étant de quatre par exemple.

3. Convertisseur continu-continu selon la revendication 1 ou 2, caractérise en ce qu'il comprend un circuit de réglage pour commander le composant de réglage (S1) du convertisseur continu-continu en fonction de la tension de sortie (UA) du convertisseur continu-continu en ce sens que ce composant de réglage (S1) soit actionné avec un temps d'enclenchement constant et un temps de coupure variable, un temps de coupure long pouvant être préfixé dans le cas d'une tension de sortie (UA) élevée et un temps de coupure court pouvant être préfixé dans le cas d'une faible tension de sortie (UA).

4. Convertisseur continu-continu selon une des revendications 1 à 3, caractérisé en ce que l'inductance de lissage (L) comporte un enroulement supplémentaire (W1) au moyen duquel peut s'effectuer, en partie au moins, l'alimentation en énergie du régulateur.

5. Convertisseur continu-continu selon une des revendications 1 à 4, caractérisé en ce que l'élément capacitif (CR) déterminant pour la résonance et le condensateur de lissage (CG) côté sortie du convertisseur continu-continu sont reliés l'un à l'autre à leur base, d'où part une liaison collective passant par l'enroulement primaire (WI) d'un transformateur de courant supplémentaire (SW) qui est prévu pour l'obtention d'un signal proportionnel au courant de charge.

Fig. 1

Fig. 2

Fig. 3

Fig.4

Fig.5

Fig.6

Fig. 7

Fig. 8

Fig. 9

9

Fig. 10

Fig. 11

10

Fig. 12

EP 0 432 603 B1